# EUROPÄISCHE PATENTSCHRIFT

(11) **EP 0 441 906 B1**
(45) Veröffentlichungstag und Bekanntmachung des Hinweises auf die Patenterteilung: **10.08.1994**
(21) Anmeldenummer: 90910104.0
(22) Anmeldetag: 01.07.1990
(51) Int. Cl.: B60P 7/08

(54) **MOTORGETRIEBENE SPANN- UND AUFWICKELVORRICHTUNG FÜR ZURRGURTE MIT INTEGRIERTER REGELUNG DER ZURRSPANNUNG**
MOTOR-DRIVEN TENSIONING AND TAKE-UP DEVICE FOR LASHING STRAPS WITH INCORPORATED ADJUSTMENT OF THE LASHING TENSION
DISPOSITIF COMMANDE PAR MOTEUR POUR TENDRE ET ENROULER DES SANGLES D'AMARRAGE AVEC REGLAGE INTEGRE DE LA TENSION D'AMARRAGE

(30) Priorität: 03.07.1989 DE 8908090 U
(43) Veröffentlichungstag der Anmeldung: 21.08.1991
(73) Patentinhaber: SPANSET INTER AG, CH-8618 Oetwil am See (CH)
(72) Erfinder: KÄMPER, Hans-Werner, D-5102 Würselen (DE)
(74) Vertreter: Tergau, Enno, Dipl.-Ing.
(86) Internationale Anmeldenummer: DE9000491
(87) Internationale Veröffentlichungsnummer: WO9100196

(56) Entgegenhaltungen:
- EP-A- 0 145 646
- GB-A- 1 194 771
- GB-A- 2 128 574
- GB-A- 2 166 704
- US-A- 3 240 473

## Beschreibung

Die vorliegende Erfindung betrifft eine motorgetriebene Spann- und Aufwickelvorrichtung für Zurrgurte. Derartige Vorrichtungen sind beispielsweise als Spannwinden und Spannratschen zum Verzurren von Ladungen beim Transport von beweglichen Gütern seit langem bekannt. Ferner ist bekannt, daß eine ausreichende Sicherung der Ladung durch die Beaufschlagung des Zurrgurtes mit einer möglichst hohen Zurrspannung erreicht wird. Wenn in diesem Zusammenhang von Zurrgurten gesprochen wird, so handelt es sich um eine besonders bevorzugte Ausführungsform eines Zurrmittels in textiler Art. Gleichwohl sind auch andere Zurrmittel, wie Ketten, Seile, Trossen u.ä. aus verschiedensten Werkstoffen zum Verzurren von Ladungen geeignet. Bei den üblichen Spann- und Aufwickelvorrichtungen wird die notwendige Verzurrspannung entweder per Hand oder per Motor aufgebracht, wobei der Zurrgut mit stets unterschiedlichen, undefinierten Verzurrspannungen beaufschlagt wird. Für einen sicheren Transport von verzurrten Gütern ist jedoch eine definierte Verzurrspannung notwendig, die sich aus dem Ladegewicht, den Verzurrwinkeln, der Beschaffenheit des Untergrundes der Ladefläche, insbesondere der zwischen Ladung und Ladefläche wirksamen Reibung, und den auftretenden Beschleunigungskräften während des Transportes exakt bestimmen läßt. Es sind daher in den Verzurrstrang integrierte Zurrspannungsmeßhilfen bekannt, die dem Bediener während des Spannvorgangs die im Verzurrstrang auftretende Zurrspannung anzeigen.

Nachteilig an derartigen Zurrspannungsmeßhilfen ist, daß ein während des Transportes auftretender Spannungsabfall, beispielsweise durch Setzung der Ladung, in der Regel vom Bediener unbemerkt bleibt. Sinkt die Zurrspannung auf diese Weise unter einen zur Ladungssicherung notwendigen Minimalwert ab, können Teile der Ladung oder im Negativfall die gesamte Ladung von der Ladefläche herunterfallen.

Um ein Absinken der wirksamen Zurrspannung unter den kritischen Minimalwert zu verhindern, ist eine von einem Druckluftmotor getriebene, auf oder an der Ladefläche eines Lastkraftwagens montierbare Spannwinde bekannt, die ein Regelventil aufweist, welches den Druckluftmotor mit einem Solldruck beaufschlagt. Dieser Solldruck ist am Regelventil manuell einstellbar. Der Druckluftmotor treibt seinerseits über ein Getriebe eine Aufwickelwelle für den Verzurrgurt an, wobei der Zurrgurt um die rotierende Aufwickelwelle gewickelt wird, wodurch der Verzurrstrang mit steigender Zurrspannung beaufschlagt wird. Mit einem etwaigen Absinken der im Verzurrstrang wirksamen Zurrspannung ist ein gleichzeitiges Absinken des im System vorherrschenden Ist-Druckes verbunden. Die Aufwickelwelle wird vom Druckluftmotor so lange in Aufwickelrichtung weitergedreht und der Zurrgurt gleichzeitig weiter aufgewickelt, bis der am Regelventil eingestellte Solldruck wieder erreicht ist. Besonders nachteilig hierbei ist die ausschließliche Regelung der Spannkraft über den am Regelventil eingestellten Solldruck. Dieser Solldruck ist nämlich von dem auf die Aufwickelwelle bzw. auf das Getriebe vom Verzurrgurt her wirksamen Drehmoment abhängig. Das an der Aufwickelwelle wirksame Drehmoment wird jedoch entscheidend vom Durchmesser des auf der Aufwickelwelle befindlichen Gurtwickels beeinflußt. Zwangsläufig folgt daraus der Nachteil, daß aufgrund eines immer größer werdenden Wickeldurchmessers beim Nachspannen mit dem ursprünglich eingestellten Solldruck die gewünschte, definierte Zurrspannung nicht mehr erreicht wird. Das Rückmeldesignal in Form des an der Aufwickelwelle wirkenden Drehmoments für den beschriebenen Regelkreis bei der bekannten Spannwinde wird folglich nur mittelbar gemessen.

Aus der **GB-A-2 128 574** ist eine Spann- und Aufwickelvorrichtung für Zurrgurte mit den Merkmalen des Oberbegriffs des Anspruchs 1 bekannt. Ferner ist aus dieser Druckschrift bekannt, mehrere derartige Spann- und Aufwickelvorrichtungen an einem LKW vorzusehen und ihre Hydraulikmotoren über eine zentrale Hydraulikpumpe zu speisen und den gesamten Flüssigkeitskreislauf der Hydraulik zentral vom Führerhaus aus zu steuern. Diese bekannte Spann- und Aufwickelvorrichtung weist schließlich noch mechanische Sperrelemente zur Verhinderung des unbeabsichtigten Rückdrehens der Aufwickeltrommel und ein damit verbundenes Nachlassen der Zurrspannung auf. Eine solldruck-gesteuerte Spannungsregelung für die Zurrspannung ist dort jedoch nicht erwähnt.

Die Erfindung geht daher davon aus, eine Spann- und Aufwickelvorrichtung für Zurrgurte so auszuführen, daß die im Verzurrstrang wirksame Zurrspannung während des Transportes möglichst konstant bleibt.

Diese Problemstellung ist durch die im kennzeichnenden Teil des Anspruchs 1 enthaltenen Merkmale gelöst.

Der grundsätzliche Lösungsgedanke der Erfindung besteht darin, einen taktilen Meßwertgeber zur Messung der im Verzurrstrang wirksamen Zurrspannung unmittelbar am Zurrgurt zu positionieren. Die erfindungsmäßige Vorrichtung weist hierzu eine von einem Elektromotor getriebene Aufwickelwelle zum Aufwickeln des Zurrgurtes von seinem Losende her auf. Die Aufwickelwelle ist in einem Grundgestell drehbar gelagert, welches mit einer im wesentlichen ebenen Aufnahmefläche beispielsweise auf bzw. unter der Ladefläche eines Lastkraftwagens montiert ist. Gleichzeitig ist am Grundgestell der taktile Meßwertgeber derart angeformt, daß der Zurrgurt vom Ladegut her kommend am Meßwertgeber umgelenkt wird, wodurch der Meßwertgeber vom Zurrgurt druckbeaufschlagt wird. Der Meßwertgeber weist zur Messung des Umlenkdruckes als Meßgröße für die Zurrspannung eine bewegbare Tastzunge auf. Der auf diese Weise ermittelte Wert wird als Ist-Größe an eine den Antriebsmotor regelnde Steuerelektronik weitergegeben. In abhängig von den Signalen der Steuerelektronik treibt der Antriebsmotor die Aufwickelwelle an, wodurch der Regelkreis sich schließt.

Eine Ausführung der Vorrichtung nach Anspruch 2 erlaubt den konstruktiv einfachen Anschluß des Elektromotors an das Bordstromnetz des Lastkraftwagens. Gegenüber dem Stand der Technik entfällt bei dieser Ausführungsform die Notwendigkeit eines am Lastkraftwagen montierten, konstruktiv aufwendigen Druckluftaggregats.

Eine Ausführung der Vorrichtung nach den Ansprüchen 3 bis 7 betrifft eine besonders günstige Ausführung des Meßwertgebers als Dreipunktmesser. Hierbei liegt die als zylindrischer Tastbalken ausgeführte Tastzunge zwischen zwei an ihren Stirnseiten konvex abgerundeten Vorsprüngen. Der Zurrgurt liegt sowohl an den Stirnseiten der Vorsprünge als auch am Tastbalken an. Das Prinzip eines derartigen Dreipunktmessers ist für die Zugkraftmessung von Fäden In der Textilindustrie bekannt. Hierbei wird die Steigung der den Berührungspunkt des Gurtes an einer Vorsprungstirnseite mit dem Berührungspunkt des Gurtes am Tastbalken theoretisch verbindenden Tangente ermittelt. Die Tangentensteigung ändert sich mit der den Tastbalken beaufschlagenden Zurrspannung. Die bei der jeweils wirksamen Gurtspannung vorliegende Tangentensteigung ist somit die Grundlage für eine mathematisch exakte Vorausberechnung derjenigen Momentanstellung, welche der Tastbalken beim Vorliegen der definierten Sollspannung einnehmen muß. Jeder Lagestellung des Tastbalkens kann auf diese Weise folglich ein Zurrspannungswert exakt zugeordnet werden.

In Verbindung mit einer Ausführung der Vorrichtung nach den Ansprüchen 8 bis 12 wird der Tastbalken auf seiner dem Zurrgurt abgewandten Seite von einem Federelement druckbeaufschlagt. Die auf den Tastbalken direkt wirkende Zurrspannung verhält sich direkt proportional zum Einfederweg des Federelements. Der so nach Art eine Druckfederwaage wirksame Meßwertgeber weist zudem einen in Einfederrichtung beweglichen Kontaktstift auf, der bei Erreichung der Sollspannung an einer am Meßwertgebergehäuse angeformten Kontaktplatte anliegt. Wird die Sollspannung unterschritten, federt das Druckfederelement entgegen der Einfederrichtung aus und der Kontakt zwischen Kontaktstift und Kontaktplatte wird unterbrochen, wodurch ein Signal an die Steuerelektronik gegeben wird, die umgehend ein Einschaltsignal zum Nachspannen an den Antriebsmotor weitergibt.

Besonders vorteilhaft ist die nahezu stufenlose Einstellbarkeit des gewünschten Wertes der Soll-Zurrspannung bei einer Ausführung nach den Ansprüchen 13 bis 15.

Besonders genaue Meßergebnisse liefert eine Meßwertgeberausführung als Dehnungsmeßstreifen gemäß Anspruch 16. Bei der Verwendung eines derartigen Dehnungsmeßstreifens ist jedoch zu beachten, daß der konstruktive Aufwand wegen der erforderlichen Nullpunkt-Regelung und der notwendigen Maßnahmen zur Erhaltung einer konstanten Umgebungstemperatur im Bereich des Dehnungsmeßstreifens sehr aufwendig und damit sehr kostspielig ist. Zudem kann unter extremen Einsatzbedingungen ein höherer Service-Aufwand als bei einer mechanischen Ausführung entstehen.

Die Gestaltung des Vorrichtungsgrundgestells nach den Ansprüchen 17 bis 19 betrifft eine besonders günstige Anordnung der Aufwickelwelle. Die Aufwickelwelle liegt hierbei zwischen den Grundgestellseitenwänden geschützt ein, wobei die Innenseiten der Seitenwände den Gurt in seiner Querrichtung derart führen, daß beim Aufwickeln ein bündiger Wickel entsteht. Zudem ist ein Scheuern des Gurtes an scharfen Kanten durch die konvexen Oberflächen der Meßwertgeberteile und der Gestaltung des Grundgestells nahezu ausgeschlossen.

Die Verwendung eines Schneckengetriebes nach den Ansprüchen 19 und 20 ist aufgrund der Selbsthemmung dieser Getriebeart im Ruhezustand besonders vorteilhaft. Ein Zurückdrehen der Aufwickelwelle aufgrund der vom Zurrgurt her auf die Aufwickelwelle wirkenden Kraft ist somit ausgeschlossen. Durch die Schrägverzahnung des Schneckengetriebes können vergleichsweise hohe Drehmomente bei geringen Schneckenraddurchmessern übertragen werden.

Die Anordnung des Antriebsmotors zur Antriebswelle nach den Ansprüchen 21 und 22 erlaubt eine besonders kompakte Bauweise der gesamten Vorrichtung.

Der konsequent symmetrische Aufbau des Grundgestells nach den Ansprüchen 23 und 24 ist fertigungstechnisch aufgrund der anfallenden Gleichteile besonders günstig. Ferner ist es möglich, verschiedene, zueinander spiegelbildlich ausgeführte Versionen der Vorrichtung zu fertigen, die eine Anbringung der Vorrichtung an einer beliebigen Seite der Ladefläche ermöglichen. Die Kapselung der einzelnen Vorrichtungskomponenten nach den Ansprüchen 25 und 26 ist im Gebrauch besonders vorteilhaft, da weder der Antriebsmotor noch die Antriebsmechanik verschmutzen kann. Die notwendigen Instandhaltungsmaßnahmen werden dadurch vorteilhaft gesenkt. Ferner bietet die Kapselung einen knautschzonenartigen Schutz gegen externe Stoß- bzw. Schlagbeanspruchung. Auch dämpf die Kapselung die Geräuschemission der Vorrichtung erheblich. Die somit erreichte integrierte Bauweise fügt sich besonders harmonisch an eine Ladefläche an.

Der in den Ansprüchen 27 und 28 fortgesetzt Grundgedanke der Integralbauweise gewährleistet eine vorteilhafte Führung des Gurtes und eine hohe Gebrauchssicherheit der gesamten Vorrichtung beim Gütertransport.

Anhand eines in den Zeichnungen dargestellten Ausführungsbeispiels wird die Erfindung mit weiteren, erfindungswesentlichen Merkmalen geschildert.

Es zeigen:

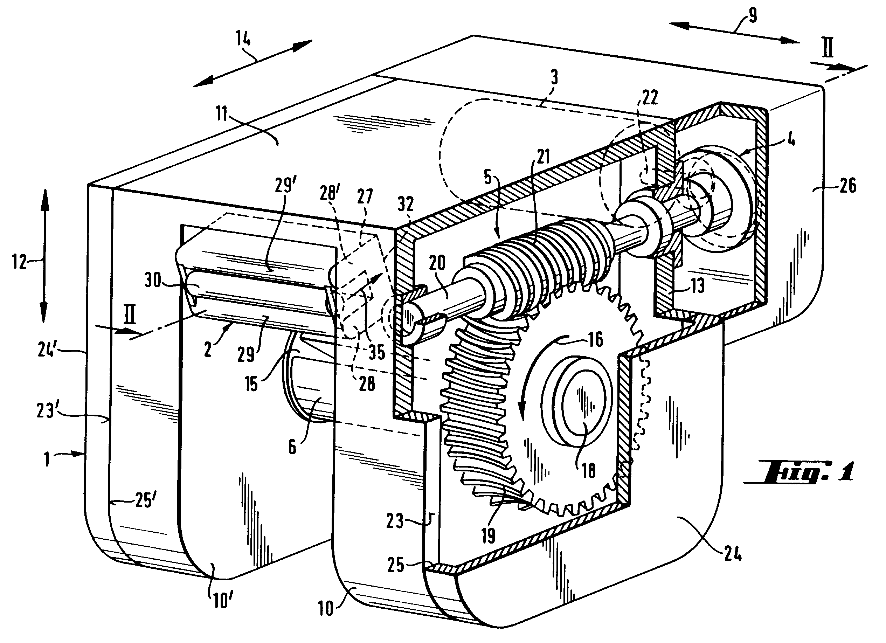

- Fig. 1: eine perspektivische, teilweise geschnittene Gesamtdarstellung der Vorrichtung,

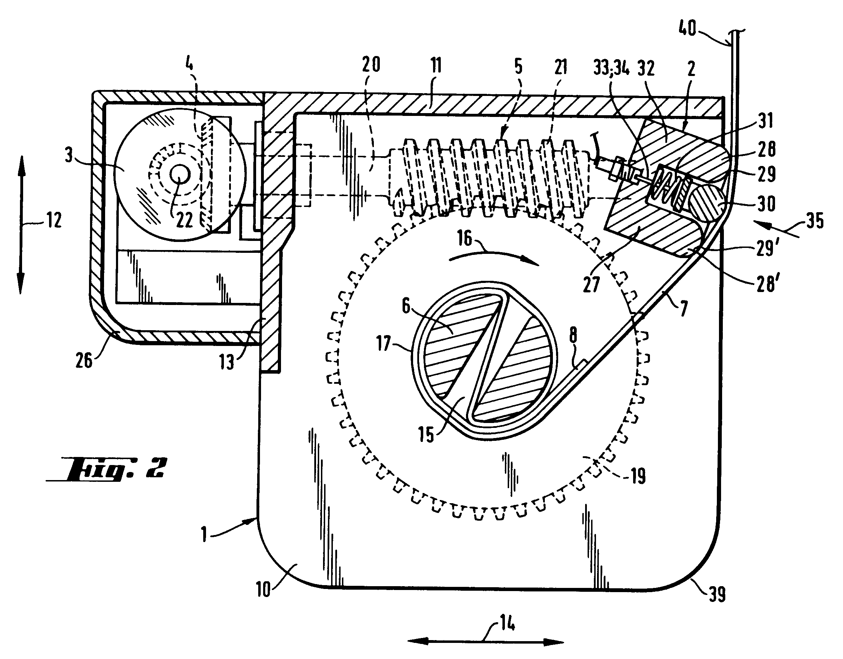

- Fig. 2: eine geschnittene Seitenansicht der Vorrichtung gemäß der Hilfslinie II-II in Fig. 1,

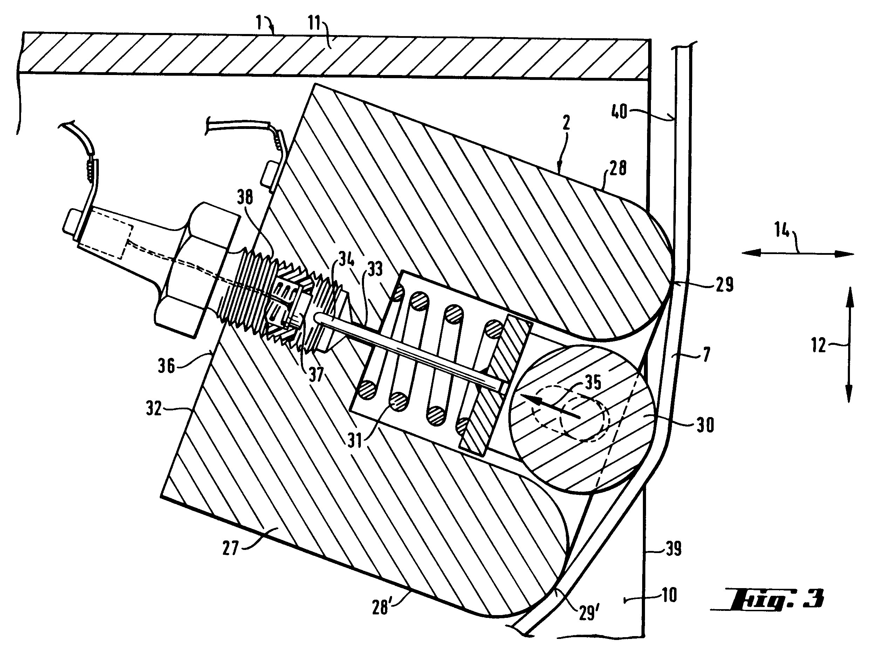

- Fig. 3: eine aus Fig. 2 vergrößerte Darstellung des Details Meßwertgeber.

Die im folgenden als Spannwinde bezeichnete Vorrichtung besteht im wesentlichen aus einem Grundgestell 1, einem Meßwertgeber 2, einem Antriebsmotor 3, einem Zwischengetriebe 4, einem Hauptgetriebe 5 und einer Aufwickelwelle 6 zum Aufwickeln des Zurrgurtes 7 von seinem Losende 8 her. Das Grundgestell 1 weist einen in Querrichtung 9 des Zurrgurtes 7 verlaufenden, U-förmigen Querschnitt auf. Die Seitenschenkel des U-förmigen Querschnitts bilden die Gestellseitenwände 10,10'. Die Auflagefläche 11 ergänzt die Gestellseitenwände 10,10' zum U-förmigen Grundgestellquerschnitt. In einer parallel zu den Gestellseitenwänden 10,10', senkrecht zur Querrichtung 9 verlaufenden Vertikalrichtung 12 erstreckt sich eine rechtwinklig an die Stirnseiten der Gestellseitenwände 10,10' und die Stirnseite der Auflagefläche 11 angeformte Gestellrückwand 13. Die Gestellseitenwände 10,10', die Auflagefläche 11 und die Gestellrückwand 13 ergänzen sich so zum Grundgestell 1.

Die sich in der von der Vertikalrichtung 12 und der zur Querrichtung 9 und zur Vertikalrichtung 12 senkrechten Längsrichtung 14 aufgespannten Ebene erstreckenden Gestellseitenwände 10,10' sind etwa quadratisch dimensioniert und weisen an ihren Innenseiten Ausnehmungen auf, in welchen die Aufwickelwelle 6 drehbar gelagert ist. Die Ausnehmungen sind etwa im Schnittpunkt der beiden zu den Quadratflächen der Gestellseitenwände 10,10' gehörenden Diagonalen in die Gestellseitenwände 10,10' eingeformt. Die Aufwickelwelle ist somit im Zentrum des Grundgestells 1 fixiert und wird dabei über ihre gesamte Breite in Querrichtung 9 diametral vom Einzugsschlitz 15 durchsetzt. Zum Aufwickeln des Zurrgurtes 7 wird dessen Losende 8 durch den Einzugsschlitz 15 gezogen, um durch Rotation der Aufwickelwelle 6 in Aufwickelrichtung 16 den Gurtwickel 17 zu erzeugen.

In Querrichtung 9 durchsetzt ein an die Aufwickelwelle 6 angeformter Wellenbereich 18 die Gestellseitenwand 10. Der über die Außenseite der Gestellseitenwand 10 hinausstehende Wellenbereich 18 trägt das Schneckenrad 19, welches mit der Aufwickelwelle 6 auf diese Weise antriebsmäßig starr verbunden ist. In Vertikalrichtung 12 liegt oberhalb des Schneckenrades 19 die in Längsrichtung 14 verlaufende, in der Gestellseitenwand 10 drehbar gelagerte Antriebswelle 20 mit der an sie angeformten Schnecke 21. Die Schnecke 21 und das Schneckenrad 19 bilden das erwähnte Hauptgetriebe 5.

Die Antriebswelle 20 durchsetzt die Gestellrückwand 13 mit einem Freiende, welches in das in Längsrichtung 14 neben der Gestellrückwand 13 positionierte Zwischengetriebe 4 mündet. In Querrichtung 9 neben dem Zwischengetriebe 4 ist der Antriebsmotor 3 positioniert, dessen Motorwelle 22 in das Zwischengetriebe 4 mündet.

Die Spannwinde wird folgendermaßen gespannt:
Der Antriebsmotor 3 gibt seine Antriebsleistung über seine als Abtriebswelle wirksame Motorwelle 22 in das Zwischengetriebe 4 ab. Die Antriebsleistung wird dort auf die Antriebswelle 20 umgeleitet und über die Schnecke 21 auf das Schneckenrad 19 übertragen. Das sich in Aufwickelrichtung 16 drehende Schneckenrad 19 treibt über den Wellenbereich 18 die Aufwickelwelle 6 derart an, daß diese in Aufwickelrichtung 16 rotiert. Der Zurrgurt 7 wird dabei um die Aufwickelwelle 6 gewickelt, so daß sich kontinuierlich der Gurtwickel 17 aufbaut. Ist die Sollspannung des Zurrgurtes 7 erreicht, wird der Antriebsmotor 3 abgeschaltet, so daß die Aufwickelwelle 6 zum Stillstand kommt. Durch die selbsthemmende Wirkung des Hauptgetriebes 5 wird eine Rückdrehung der Aufwickelwelle 6 gegen die Aufwickelrichtung 16 verhindert. Das Hauptgetriebe 5 wirkt somit gleichzeitig als Spannwindengesperre.

Die Gestellseitenwand 10 weist in Querrichtung 9 abstehende Wandvorsprünge 23 auf, die in Verbindung mit der ebenfalls über die Gestellseitenwand 10 in Querrichtung 9 überstehenden Auflagefläche 11 eine schüsselförmige Halbschale zur Aufnahme des Hauptgetriebes 5 bilden. Auf die Wandvorsprünge 23 ist der ebenfalls halbschalenförmige Seitenwanddeckel 24 mit seinen in Querrichtung 9 vorstehenden Deckelvorsprüngen 25 gegen die Wandvorsprünge 23 aufgesetzt. Die Gestellseitenwände 10 und ihre Wandvorsprünge 23 bilden mit den Seitenwanddeckeln 24 und ihren Deckelvorsprüngen 25 ein das Hauptgetriebe kapselndes Getriebehäuse.

Aufgrund des achsensymmetrischen Gestellaufbaus weist auch die Gestellseitenwand 10' in Querrichtung 9 hervorstehende Wandvorsprünge 23' auf, gegen die der Seitenweanddeckel 24' mit seinen Deckelvorsprüngen 25' anliegend aufgesetzt ist. Die Gestellseitenwand 10' und ihre Wandvorsprünge 23' bilden zusammen mit dem Seitenwanddeckel 24' und den Deckelvorsprüngen 25' einen gekapselten Schaltkasten für eine nicht weiter dargestellte Steuerelektronik.

Die Kapselung des Nebengetriebes 4 und des Antriebsmotors 3 ist durch eine kastenförmige, an einer Seite offene Motorhaube 26 realisiert. Die Motorhaube 26 wird mit ihrer offenen Seite derart über das Zwischengetriebe 4 und den Antriebsmotor 3 gestülpt, daß sie mit ihren Stirnseiten an der Gestellrückwand 13 fest anliegt. Die Motorhaube 26 weist dabei die Raumform einer kastenartigen Wanne auf.

An der der Gestellrückwand 13 abgewandten Freiseite des Grundgestells 1 ist von den Innenseiten der Gestellseitenwände 10,10' flankiert der Meßwertgeber 2 unterhalb der Auflagefläche 11 montiert. Der Meßwertgeber 2 weist seinerseits ein im wesentlichen U-förmiges Meßwertgebergehäuse 27 auf. Die als wangenartige Vorsprünge 28,28' ausgeformten U-Schenkel weisen konvex ausgebildete Stirnseiten 29,29' auf, an welchen der Zurrgurt 7 mit seiner einen Flachseite 40 fest anliegt.

Zwischen den Vorsprüngen 28,28' liegt die in Querrichtung 9 verlaufende, als zylinderförmiger Tastbalken 30 ausgebildete Tastzunge ein. Dieser Tastbalken 30 liegt mit einem Teil seiner Zylinderfläche ebenfalls an der Flachseite 40 des Zurrgurtes 7 an. Vom Zurrgurt 7 aus gesehen bilden die Vorsprünge 28,28' und der Tastbalken 30 eine gewellte, drei konvexe Teilflächen aufweisende, gleichsam aus drei Halbzylindern bestehende Auflagefläche für den Zurrgurt 7 mit seiner Flachseite 40. Mit der dem Zurrgurt 7 abgewandten Teilfläche seiner Mantelfläche liegt der Tastbalken 30 federkraftbeaufschlagt gegen das Federelement 31 an, wobei das Federelement von den Vorsprüngen 28,28' flankiert zwischen dem Tastbalken 30 und dem die Vorsprünge 28,28' zum U-förmigen Meßwertgebergehäuse 27 ergänzenden Sensorgehäuserückwand 32 ein.

Das aus der Sensorgehäuserückwand 32 und den Vorsprüngen 28,28' bestehende Meßwertgebergehäuse 27 wird im Bereich der Sensorgehäuserückwand 32 vom Führungskanal 33 durchsetzt. Der Führungskanal 33 liegt deckungsgleich fluchtend zur Mittellängsachse des als Schraubenfeder ausgeführten Federelements 31. An die dem Zurrgurt 7 abgewandte, an das Federelement 31 anliegende Mantelteilfläche des Tastbalkens 30 ist der das Federelement 31 etwa deckungsgleich zu seiner Mittellängsachse durchsetzende Kontaktstift 34 angeformt. Der Kontaktstift 34 steht vom Tastbalken 30 aus das Federelement 31 durchsetzend bis in den Führungskanal 33 hinein. Der Kontaktstift 34 ist dabei mit dem Tastbalken 30 derart bewegungsmäßig verbunden, daß er um den gleichen Weg im Führungskanal in Einfederrichtung 35 verfahren wird, wie der Tastbalken 30 gegen das Federelement 31 bzw. um den Einfederweg des Federelements 31 in Einfederrichtung 35.

Auf der dem Zurrgurt 7 und dem Federelement 31 abgewandten Rückseite der Sensorgehäuserückwand 32 ist im Bereich des Führungskanals 33 die in die Sensorgehäuserückwand 32 hineinstehende Kontaktplatte 37 fixiert. An ihren Seitenflanken weist die Kontaktplatte 37 das Gewinde 38 auf, womit sie gegen die Einfederrichtung 35 in Richtung auf das Federelement 31 verfahrbar ist.

Die Wirkungsweise des Meßwertgebers 2 ist folgende:
Der Zurrgurt 7 verläuft etwa in Vertikalrichtung 12 vom Ladegut her kommend an der Auflagefläche 11 vorbei hin zum Meßwertgeber 2. Der Meßwertgeber 2 steht mit der Stirnseite 29 seines Vorsprungs 28 und seinem Tastbalken 30 über die das Grundgestell 1 gegenüber dem Zurrgurt 7 in Längsrichtung 14 und in Vertikalrichtung 12 begrenzende Hüllinien 39 hinaus. Durch die in Längsrichtung 14 gegenüber der bisherigen Gurtlaufrichtung versetzte Aufwickelwelle 6 muß der Gurt für seinen weiteren Verlauf umgelenkt werden. Durch das teilweise Herausragen über die Hüllinie 39 wirken die Stirnseite 29 des Vorsprungs 28 und der Tastbalken 30 wie eine Umlenkkante auf den mit seiner Flachseite 40 an sie anliegenden Zurrgurt 7. Der Zurrgurt 7 läuft also zunächst straff in Vertikalrichtung 12 verlaufend an die Stirnseite 29 des Vorsprungs 28 heran. An der Stirnseite 29 wird der Zurrgurt 7 über den Tastbalken 30 und die Stirnseite 29' umgelenkt, um weiter gestrafft in Richtung auf den Gurtwickel 17 der Aufwickelwelle 16 zuzulaufen. Der Zurrgurt 7 berührt die Stirnseiten 29,29' bei seiner Umlenkung tangentenartig.

Aufgrund seiner Umlenkung drückt der Zurrgurt 7 mit der gesamten, aus seiner Zurrspannung resultierenden Kraft auf den Tastbalken 30. Der Tastbalken 30 verfährt dadurch in Einfederrichtung 35 gegen das Federelement 31, wobei der Kontaktstift 34 ebenfalls in Einfederrichtung 35 im Führungskanal 33 verfahren wird. Wird der Zurrgurt 7 nun nach dem oben beschriebenen Verfahren bis zur Erreichung seiner Sollspannung vorgespannt, erreicht der Zurrgurt 7 diese definierte Sollspannung genau in dem Moment, in welchem der Kontaktstift 34 und die Kontaktplatte 37 einander berühren.

Sinkt die Gurtspannung während des Transportes aufgrund beispielsweise von Setzen oder Versetzen der Ladung, verfahren der Tastbalken 30 und der Kontaktstift 34 gegen die Einfederrichtung 35 vom Federelement 31 beaufschlagt gegen den Zurrgurt 7. Der Kontaktstift 34 und die Kontaktplatte 37 geraten hierdurch außer Kontakt. Dieser fehlende Kontakt zwischen der Kontaktplatte 37 und dem Kontaktstift 34 bewirkt ein Signal an die in der Gestellseitenwand 10' befindliche Steuerelektronik, die ein Einschaltsignal an den Antriebsmotor 3 weiterleitet. Der Zurrgurt 7 wird nun auf die oben beschriebene Weise solange nachgespannt, bis der Kontaktstift 34 wiederum an der Kontaktplatte 37 anliegt.

Über ein Schrauben der Kontaktplatte 37 in oder entgegen die Einfederrichtung 35 kann die vorgegebene Zurrspannung verändert und justiert werden. Durch eine Schraubbewegung in Einfederrichtung 35 wird die vorgegebene Sollspannung erhöht, während durch eine Schraubbewegung gegen die Einfederrichtung 35 die vorgegebene Sollspannung reduziert wird.

### Bezugszeichen

- 1: Grundgestell
- 2: Meßwertgeber
- 3: Antriebsmotor
- 4: Zwischengetriebe
- 5: Hauptgetriebe
- 6: Aufwickelwelle
- 7: Zurrgurt
- 8: Losende
- 9: Querrichtung
- 10,10': Gestellseitenwand
- 11: Auflagefläche
- 12: Vertikalrichtung
- 13: Gestellrückwand
- 14: Längsrichtung
- 15: Einzugsschlitz
- 16: Aufwickelrichtung
- 17: Gurtwickel
- 18: Wellenbereich
- 19: Schneckenrad
- 20: Antriebswelle
- 21: Schnecke
- 22: Motorwelle
- 23,23': Wandvorsprung
- 24,24': Seitenwanddeckel
- 25,25': Deckelvorsprung
- 26: Motorhaube
- 27: Meßwertgebergehäuse
- 28,28': Vorsprung
- 29,29': Stirnseite
- 30: Tastbalken
- 31: Federelement
- 32: Sensorgehäuserückwand
- 33: Führungskanal
- 34: Kontaktstift
- 35: Einfederrichtung
- 36: Rückseite
- 37: Kontaktplatte
- 38: Gewinde
- 39: Hüllinie
- 40: Flachseite

## Patentansprüche

1. Spann- und Aufwickelvorrichtung für Zurrgurte (7) mit motorischem Antrieb, insbesondere für das Verzurren von Ladegut auf Ladeflächen von Lastkraftwagen, mit vorzugsweise an einem gemeinsamen Grundgestell (1) angeordnet
- einem Antriebsmotor (3) und
- einer vom Antriebsmotor (3) angetriebenen Aufwickelwelle (6) für den Zurrgurt (7),
gekennzeichnet durch
- einen vorzugsweise am Grundgestell (1) fixierten, mit einer Tastzunge bzw. einem Tastbalken (30) unter Anpreßdruck an einer Flachseite (40) des Zurrgurtes (7) anliegenden und dadurch den Zurrgurt (7) nach Art einer Umlenkkante beaufschlagenden Meßwertgeber (2)
-- zur Messung des von der Tastzunge bzw. dem Tastbalken (30) auf den Zurrgurt (7) ausgeübten Umlenkdruckes als Meßgröße der Zurrspannung und
-- zur Weitergabe des Meßwertes als Istgröße an einen den Antrieb der Aufwickelwelle (6) zur Aufrechterhaltung einer Sollzurrspannung nachregelnden Regelkreis.

2. Vorrichtung nach Anspruch 1,
gekennzeichnet durch
eine Energieversorgung des Antriebsmotors (3) durch das Bordstromnetz des Lastkraftwagens.

3. Vorrichtung nach Anspruch 1 oder 2,
gekennzeichnet durch
zwei die Tastzunge (= Tastbalken 30) zwischen sich führende und seitlich flankierende Vorsprünge (28,28'), wobei die Stirnseiten (29,29') der Vorsprünge (28,28') und die Tastzunge (= Tastbalken 30) an derselben Flachseite (40) des Zurrgurtes (7) nach Art eines Dreipunktmessers anliegen und dadurch den Zurrgurt (7) nach Art einer Umlenkkante abwinkeln.

4. Vorrichtung nach Anspruch 3,
dadurch gekennzeichnet,
daß die Tastzunge ein sich quer zur Gurtlaufrichtung erstreckender, zylindrischer Tastbalken (30) ist und die dem Zurrgurt (7) zugewandten Stirnseiten (29,29') der Vorsprünge (28,28') konvex ausgeformt sind.

5. Vorrichtung nach einem oder mehreren der vorhergehenden Ansprüche,
dadurch gekennzeichnet,
daß die dem Zurrgurt (7) abgewandte Mantelfläche der Tastzunge (= Tastbalken 30) von einem Federelement (31) druckbeaufschlagt ist und einen angeformten, etwa senkrecht abstehenden Kontaktstift (34) aufweist.

6. Vorrichtung nach einem oder mehreren der vorhergehenden Ansprüche,
dadurch gekennzeichnet,
daß das als Spiralfeder ausgeführte Federelement (31) den Kontaktstift (34) wendelförmig umgibt, wobei der Kontaktstift (34) das Federelement (31) zentrisch, etwa deckungsgleich mit der Federmittellängsachse durchsetzt.

7. Vorrichtung nach einem oder mehreren der vorhergehenden Ansprüche,
dadurch gekennzeichnet,
daß die Vorsprünge (28,28') die Seitenschenkel eines im Querschnitt U-förmigen Meßwertgebergehäuses (27) bilden und das Federelement (31) und der Tastbalken (30) von den Vorsprüngen (28,28') geführt zwischen den Vorsprüngen (28,28') einliegen.

8. Vorrichtung nach Anspruch 7,
dadurch gekennzeichnet,
daß das Federelement (31) an einem die beiden Seitenschenkel verbindenen, eine Rückwand (32) des Meßwertgebergehäuses bildenden Vertikalschenkel widergelagert anliegt.

9. Vorrichtung nach Anspruch 8,
gekennzeichnet durch
eine die Meßwertgebergehäuserückwand (32) parallel und nahezu deckungsgleich zur Federmittellängsachse durchsetzende Durchgangsöffnung als Führungskanal (33) für den Kontaktstift (34).

10. Vorrichtung nach den Ansprüchen 6 und 9,
dadurch gekennzeichnet,
daß der Kontaktstift (34)
- gegen das Federelement (31) entlang der Federmittellängsachse verschiebbar ist und
- von Führungskanalinnenwänden geführt in den Führungskanal (33) hineinragt,
und daß
an der dem Federelement (31) abgewandten Außenseite der Meßwertgebergehäuserückwand (32) im Bereich des Führungskanals (33) eine in den Führungskanal (33) hineinreichende Kontaktplatte (37) montiert ist.

11. Vorrichtung nach Anspruch 10,
gekennzeichnet durch
eine Funktionsstellung mit an der Kontaktplatte (37) anliegendem Kontaktstift (34) als Ruheposition.

12. Vorrichtung nach Anspruch 10,
gekennzeichnet durch
die Nichtberührung von Kontaktplatte (37) und Kontaktstift (34) als Schaltposition, für ein Steuersignal zum Einschalten an den Antriebsmotor (3)

13. Vorrichtung nach einem oder mehreren der vorhergehenden Ansprüche,
gekennzeichnet durch
eine Justierbarkeit der relativen Lage der Kontaktplatte (37) zum Kontaktstift (34).

14. Vorrichtung nach einem oder mehreren der vorhergehenden Ansprüche,
dadurch gekennzeichnet,
daß der Einfederweg des Federelements (31) proportional zur Zurrspannung des Zurrgurtes (7) ist.

15. Vorrichtung nach Anspruch 13 und 14,
dadurch gekennzeichnet,
daß eine über eine am Meßwertgebergehäuse (27) befindliche Maßskala ablesbare Sollspannung für den Zurrgurt (7) durch eine definierte Relativstellung der Kontaktplatte (37) zum Kontaktstift (34) einstellbar ist.

16. Vorrichtung nach einem oder mehreren der vorhergehenden Ansprüche,
dadurch gekennzeichnet,
daß zwischen der Tastzunge (= Tastbalken 30) und der Innenseite der Meßwertgebergehäuserückwand (32) ein Dehnungsmeßstreifen einliegt.

17. Vorrichtung nach einem oder mehreren der vorhergehenden Ansprüche,
gekennzeichnet durch
ein im wesentlichen U-förmiges Grundgestell (1), zwischen dessen U-Schenkeln die Aufwickelwelle (6) drehbar gelagert ist und dessen die beiden U-Schenkel verbindender Vertikalschenkel an seiner der Aufwickelwelle (6) abgewandten Seite als Auflagefläche (11) gestaltet ist.

18. Vorrichtung nach einem oder mehreren der vorhergehenden Ansprüche,
dadurch gekennzeichnet,
daß die Aufwickelwelle (6) diametral, über ihre gesamte Länge von einem Einzugsschlitz (15) zur Aufnahme des Losendes (8) des Zurrgurtes (7) durchsetzt ist.

19. Vorrichtung nach einem oder mehreren der vorhergehenden Ansprüche,
gekennzeichnet durch
ein Schneckenrad (19),
- dessen Drehachse die Aufwickelwelle (6) ist und
- das seitlich an die Aufwickelwelle (6) angeformt ist.

20. Vorrichtung nach einem oder mehreren der vorhergehenden Ansprüche,
gekennzeichnet durch
eine Antriebswelle (20) mit einer angeformten, mit dem Schneckenrad (19) in Eingriff befindlichen Schnecke (21).

21. Vorrichtung nach Anspruch 20,
dadurch gekennzeichnet,
daß ein Antriebsende der Antriebswelle (20) in ein vom Antriebsmotor (3) über eine Motorwelle (22) getriebenes Umlenkgetriebe (= Zwischengetriebe 4) mündet.

22. Vorrichtung nach Anspruch 21,
dadurch gekennzeichnet,
daß das Umlenkgetriebe (= Zwischengetriebe 4) und der Antriebsmotor (3) an die Antriebswelle (20) angeflanscht sind.

23. Vorrichtung nach einem oder mehreren der vorhergehenden Ansprüche,
dadurch gekennzeichnet,
daß die Seitenschenkel des Grundgestells (1) hohle Gestellseitenwände (10,10') bilden derart, daß eine Gestellseitenwand (10) ein aus dem Schneckenrad (19) und der Schnecke (21) gebildetes Schneckengetriebe (= Hauptgetriebe 5) nach Art eines Getriebegehäuses aufnimmt und die gegenüberliegende Gestellwand (10)' eine Steuerelektronik nach Art eines Schaltkastens aufnimmt.

24. Vorrichtung nach einem oder mehreren der vorhergehenden Ansprüche,
dadurch gekennzeichnet,
daß etwa rechtwinklig zur Auflagefläche (11) des Grundgestells (1) und dessen Seitenwänden (10,10') eine die Seitenwände (10,10') verbindende, von der Antriebswelle (20) durchsetzte Gestellrückwand (13) an die Stirnseiten der Auflagefläche (11) und der Seitenwände (10,10') angeformt ist.

25. Vorrichtung nach einem oder mehreren der vorhergehenden Ansprüche,
dadurch gekennzeichnet,
daß der Antriebsmotor (3) und das Umlenkgetriebe (= Zwischengetriebe 4) an der Außenseite der Gestellrückwand (13) angeflanscht sind und von einem hohlkastenartigen Deckel (= Motorhaube 26) schützend umschlossen sind.

26. Vorrichtung nach einem oder mehreren der vorhergehenden Ansprüche,
dadurch gekennzeichnet,
daß die Außenseiten der Gestellseitenwände (10,10') mit abnehmbaren Deckelplatten (= Seitenwanddeckel 24,24') abgedeckt sind.

27. Vorrichtung nach einem oder mehreren der vorhergehenden Ansprüche,
dadurch gekennzeichnet,
daß das Meßwertgebergehäuse (27) zwischen den U-Schenkeln des Grundgestells (1) an der der Aufwickelwelle (6) zugewandten Innenseite der Auflagefläche (11), der Gestellrückwandinnenseite (32) gegenüberliegend, fixiert ist derart, daß die Vorsprünge (28,28') und die Tastzunge (= Tastbalken 30) aus der Hüllinie (39) des Grundgestells (1) in Richtung auf den Zurrgurt (7) vorstehen.

28. Vorrichtung nach einem oder mehreren der vorhergehenden Ansprüche,
dadurch gekennzeichnet,
daß die Aufwickelwelle (6) vom Antriebsmotor (3) mit einliegendem Losende (8) des Zurrgurtes (7) um ihre Drehachse rotierend über das als Zwischengetriebe (4) wirksame Umlenkgetriebe und über das als Hauptgetriebe (5) wirksame Schneckengetriebe zum Aufwickeln des Zurrgurtes (7) antreibbar ist.

## Claims

1. A tensioning and take-up device for lashing straps (7) equipped with a motor drive, particularly for the tying down of loads on the beds of trucks, the device preferably being disposed on a common basic frame (1) and comprising
- a drive motor (3) and
- a wind-up spindle (6) driven by the drive motor (3) for the lashing strap (7)
characterized by
- a measurement sensor (2) preferably fixed to the base frame (1), lying by means of a sensor tongue (= sensor bar 30) under contact pressure against a flat side (40) of the lashing strap (7) and thus charging the lashing strap (7) in the manner of a deflection edge;
-- for measuring the deflection pressure exerted by the sensor tongue (= sensor bar 30) on the lashing strap (7) as a measured value for the lashing tension; and
-- for transmitting the measured value as an actual value to a control circuit which adjusts the drive for the wind-up spindle (6) so as to maintain a desired lashing tension.

2. A device according to claim 1,
characterized in that
the drive motor (3) is supplied with energy by the on-board electrical system of the truck.

3. A device according to claim 1 or 2,
characterized by
two projections (28, 28') which between them guide and which laterally flank the sensor tongue (= sensor bar 30), with the end faces (29, 29') of the projections (28, 28') and the sensor tongue (= sensor bar 30) lying against the same flat side (40) of the lashing strap (7) in the manner of a three-point measuring device and thus bending the lashing strap (7) about an angle in the manner of a deflection edge.

4. A device according to claim 3,
characterized in that
the sensor tongue is a cylindrical sensor bar (30) which extends transversely to the direction of strap travel and the end faces (29, 29') of the projections (28, 28') facing the lashing strap (7) have a convex shape.

5. A device according to one or a plurality of the preceding claims,
characterized in that
the outer face of the sensor tongue (= sensor bar 30) facing away from the lashing strap (7) is charged with pressure by a spring element (31) and is provided with a shaped-on contact pin (34) which projects at approximately a right angle.

6. A device according to one or a plurality of the preceding claims,
characterized in that
the spring element (31) is configured as a coil spring and surrounds the contact pin (34) in the manner of a helix, with the contact pin (34) penetrating the spring element (31) in the center approximately in congruence with the center longitudinal axis of the spring.

7. A device according to one or a plurality of the preceding claims,
characterized in that
the projections (28, 28') from the side arms of a measuring sensor housing (27) that has a U-shaped cross section and the spring element (31) and the sensor bar (30) lie between the projections (28, 28') guided by the projections (28, 28').

8. A device according to claim 7,
characterized in that
the spring element (31) lies in abutment against a vertical arm forming the rear wall (32) of the measurement sensor housing and connecting the two side arms.

9. A device according to claim 8,
characterized by
a passage opening which penetrates the measurement sensor housing rear wall (32) parallel to and almost congruent with the center longitudinal axis of the spring as a guide channel (33) for the contact pin (34).

10. A device according to claims 6 and 9,
characterized in that
the contact pin (34)
- is displaceable relative to the spring element (31) along the center longitudinal axis of the spring and,
- guided by the inner walls of the guide channel, projects into the guide channel (33);
and a contact plate (37) which projects into the guide channel (33) is mounted on the rear wall (32) of the measurement sensor housing in the region of the guide channel (33) at the exterior side facing away from the spring element (31).

11. A device according to claim 10,
characterized by
an operational position in which the rest position is defined by the contact pin (34) lying against the contact plate (37).

12. A device according to claim 10,
characterized in that
the switching position for the generation of a control signal for switching on the drive motor (3) is defined by no contact between contact plate (37) and contact pin (34).

13. A device according to one or a plurality of the preceding claims,
characterized in that
the relative position of the contact plate (37) is adjustable with respect to the contact pin (34).

14. A device according to one or a plurality of the preceding claims,
characterized in that
the initial spring deflection path of the spring element (31) is proportional to the lashing tension of the lashing strap (7).

15. A device according to claims 13 and 14
characterized in that
a desired tension that can be read from a measuring scale at the measurement sensor housing (27) can be set for the lashing strap (7) by a defined position of the contact plate (37) relative to the contact pin (34).

16. A device according to one or a plurality of the preceding claims,
characterized in that
a wire strain gauge lies between the sensor tongue (=sensor bar 30) and the interior of the measurement sensor housing rear wall (32).

17. A device according to one or a plurality of the preceding claims,
characterized by
an essentially U-shaped basic frame (1) between whose U-shaped arms the wind-up spindle (6) is rotatably mounted and whose vertical arm which connects the two arms of the U, on its side facing away from the wind-up spindle (6), is configured as a contact surface (11).

18. A device according to one or a plurality of the preceding claims,
characterized in that
an insertion slot (15) for receiving the loose end (8) of the lashing strap (7) penetrates the wind-up spindle (6) diametrally over its entire length.

19. A device according to one or a plurality of the preceding claims,
characterized by
a worm gear (19)
- whose rotation axis is the wind-up spindle (6) and
- which is shaped onto the side of the wind-up spindle (6).

20. A device according to one or a plurality of the preceding claims,
characterized by
a drive shaft (20) having a shaped-on worm (21) which is in engagement with the worm gear (19).

21. A device according to claim 20,
characterized in that
a driving end of the drive shaft (20) opens into a reversing gear (= intermediate gear 4) driven by the drive motor (3) by way of a motor shaft (22).

22. A device according to claim 21,
characterized in that
the reversing gear (= intermediate gear 4) and the drive motor (3) are flanged to the drive shaft (20).

23. A device according to one or a plurality of the preceding claims,
characterized in that
the side arms of the basic frame (1) form hollow frame side walls (10, 10') in such a way that one frame side wall (10) receives a worm gear (= main drive assembly 5) composed of the worm wheel (19) and the worm (21) in the manner of a drive housing and the oppositely disposed frame wall (10') accommodates an electronic control unit in the manner of a switching box.

24. A device according to one or a plurality of the preceding claims,
characterized in that
a frame rear wall (13) which connects the side walls (10, 10') at approximately a right angle to the contact surface (11) of the basic frame (1) and its side walls (10, 10') and through which passes the drive shaft (20) is shaped to the end faces of the contact surface (11) and the side walls (10, 10').

25. A device according to one or a plurality of the preceding claims,
characterized in that
the drive motor (3) and the reversing drive (= intermediate gear 4) are flanged to the exterior of the frame rear wall (13) and are protectingly enclosed by a hollow box-like cover (= motor hood 26).

26. A device according to one or a plurality of the preceding claims,
characterized in that
the exterior faces of the frame side walls (10, 10') are covered by removable cover plates (= side wall covers 24, 24').

27. A device according to one or a plurality of the preceding claims,
characterized in that
the measurement sensor housing (27) is fixed between the U arms of the basic frame (1) at the interior of the contact surface (11) facing the wind-up spindle (6) opposite the interior of the frame rear wall (32) in such a manner that the projections (28, 28') and the sensor tongue (= sensor bar 30) project from the envelope (39) of the basic frame (1) in the direction toward the lashing strap (7).

28. A device according to one or a plurality of the preceding claims,
characterized in that,
in order to wind up the lashing strap (7), with the loose end (8) of the lashing strap (7) inserted, the drive motor (3), by way of the reversing gear which is effective as intermediate gear (4) and by way of the worm gear which is effective as main drive assembly (5), drives the wind-up spindle (6) so as to cause it to rotate about its axis of rotation.

## Revendications

1. Dispositif commandé par moteur pour tendre et enrouler des sangles d'amarrage (7), en particulier pour l'amarrage de chargements sur des surfaces de chargement de camions avec, de préférence disposés sur un châssis de base (1) commun,
- un moteur de commande (3) et
- une broche enrouleuse (6) entraînée par le moteur d'entraînement (3) pour la sangle d'amarrage (7)
caractérisé par
- un capteur de mesure (2) fixé de préférence au châssis de base (1), adhérant sous pression à un côté plat (40) de la sangle d'amarrage (7) avec une langue palpeuse ou une barre palpeuse (30) et ainsi chargeant la sangle d'amarrage (7) de la façon d'un chant déflecteur,
-- pour mesurer la pression de déflection exercée par la langue palpeuse ou la barre palpeuse (30) sur la sangle d'amarrage (7) en tant que valeur de mesurage de la tension d'amarrage et
-- pour transmettre la valeur de mesurage en tant que valeur réelle, à une boucle d'asservissement réglant l'entraînement de la broche enrouleuse (6) pour maintenir une tension de serrage demandée.

2. Dispositif suivant la revendication 1,
caractérisé par
une alimentation en énergie du moteur d'entraînement (3) par le réseau d'alimentation de bord du camion.

3. Dispositif suivant les revendications 1 ou 2,
caractérisé par
deux saillies (28, 28') guidant entre elles et flanquant latéralement la langue palpeuse (= barre palpeuse 30), les fronts (29, 29') des saillies (28, 28') et la langue palpeuse (= barre palpeuse 30) adhérant au même côté plat (40) de la sangle d'amarrage (7) de la façon d'un dispositif de mesurage à trois contacts et pliant ainsi la sangle d'amarrage (7) de la façon d'un chant déflecteur.

4. Dispositif suivant la revendication 3,
caractérisé en ce que
la langue palpeuse est une barre palpeuse cylindrique (30) s'étendant transversalement en direction de la marche de la sangle et que les fronts (29, 29') des saillies (28, 28') tournés vers la sangle d'amarrage (7) ont une forme convexe.

5. Dispositif suivant une ou plusieurs des revendications précédentes,
caractérisé en ce que
la face extérieure de la langue palpeuse (= barre palpeuse 30) tournée en opposition à la sangle d'amarrage (7) est chargée de pression par un élément ressort (31) et qu'elle présente un ergot de contact (34) faisant corps, saillant à peu près à angle droit.

6. Dispositif suivant une ou plusieurs des revendications précédentes,
caractérisé en ce que
l'élément ressort (31) conçu en forme de ressort spiral, entoure l'ergot de contact (34) hélicoïdalement, l'ergot de contact (34) pénétrant l'élément ressort (31) au centre, en coïncidant à peu près avec l'axe longitudinal central du ressort.

7. Dispositif suivant une ou plusieurs des revendications précédentes,
caractérisé en ce que
les saillies (28, 28') forment les bras latéraux d'un boîtier (27) de capteur de mesure en forme d'U, en coupe transversale, et que l'élément ressort (31) et la barre palpeuse (30), guidés par les saillies (28, 28'), se trouvent entre les saillies (28,28').

8. Dispositif suivant la revendication 7,
caractérisé en ce que
l'élément ressort (31) attient en aboutement contre un bras vertical formant un dos (32) du boîtier du capteur de mesure et reliant les deux bras latéraux.

9. Dispositif suivant la revendication 8,
caractérisé par
une ouverture débouchante en tant que canal de guidage (33) pour l'ergot de contact (34), pénétrant le dos (32) du boîtier du capteur de mesure, parallèle et à peu près coïncidente avec l'axe longitudinal central du ressort.

10. Dispositif suivant les revendications 6 et 9,
caractérisé en ce que
l'ergot de contact (34)
- est déplaçable contre l'élément ressort (31) le long de l'axe longitudinal central du ressort et
- qu'il débouche dans le canal de guidage (33), guidé par les parois intérieures du canal de guidage,
et qu'une
plaque de contact (37), débouchant dans le canal de guidage (33), est montée sur le dos (32) du boîtier du capteur de mesure, dans la zone du canal de guidage (33), sur la face extérieure tournée en opposition à l'élément ressort (31).

11. Dispositif suivant la revendication 10,
caractérisé par
une position de fonctionnement avec l'ergot de contact (34) attenant à la plaque de contact (37), en tant que position de repos.

12. Dispositif suivant la revendication 10,
caractérisé par
le non-contact entre la plaque de contact (37) et l'ergot de contact (34) en tant que position de commutation d'un signal de commande pour la mise en marche au moteur de commande (3).

13. Dispositif suivant une ou plusieurs des revendications précédentes,
caractérisé en ce que
la position relative de la plaque de contact (37) à l'ergot de contact (34) est ajustable.

14. Dispositif suivant une ou plusieurs des revendications précédentes,
caractérisé en ce que
le chemin de rabattement de l'élément ressort (31) est proportionnel à la tension d'amarrage de la sangle d'amarrage (7).

15. Dispositif suivant les revendications 13 et 14,
caractérisé en ce que
une tension de consigne de la sangle d'amarrage (7), lisible sur une graduation se trouvant sur le boîtier (27) du capteur de mesure, est réglable par une position relative définie entre la plaque de contact (37) et l'ergot de contact (34).

16. Dispositif suivant une ou plusieurs des revendications précédentes,
caractérisé en ce que
une jauge extensométrique se trouve entre la langue palpeuse (= barre palpeuse 30) et la face intérieure du dos du boîtier (32) du capteur de mesure.

17. Dispositif suivant une ou plusieurs des revendications précédentes,
caractérisé en ce que
un châssis de base (1) essentiellement en forme d'U, entre les bras en U duquel la broche enrouleuse (6) est logée de façon à pouvoir pivoter et dont le bras vertical sur son côté tourné en opposition à la broche enrouleuse (6), reliant les deux bras en U, est conçu comme surface d'appui (11).

18. Dispositif suivant une ou plusieurs des revendications précédentes,
caractérisé en ce que
la broche enrouleuse (6) est traversée diamétralement sur toute sa longueur, d'une fente d'introduction (15) pour la réception du bout libre (8) de la sangle d'amarrage (7).

19. Dispositif suivant une ou plusieurs des revendications précédentes,
caractérisé par
une roue hélicoïdale (19),
- dont l'axe de rotation est la broche enrouleuse (6) et
- qui se trouve sur le côté de la broche enrouleuse (6), faisant corps.

20. Dispositif suivant une ou plusieurs des revendications précédentes,
caractérisé par
un arbre moteur (20) avec une vis sans fin (21) faisant corps, se trouvant engrenée avec la roue hélicoïdale (19).

21. Dispositif suivant la revendication 20,
caractérisé en ce que
une extrémité d'entraînement de l'arbre moteur (20) débouche dans un engrenage déflecteur (= engrenage intermédiaire 4), entraîné par un moteur de commande (3) par l'intermédiaire d'un arbre du moteur (22).

22. Dispositif suivant la revendication 21,
caractérisé en ce que
l'engrenage déflecteur (= engrenage intermédiaire 4) et le moteur de commande (3) sont flasqués à l'arbre du moteur (20).

23. Dispositif suivant une ou plusieurs des revendications précédentes,
caractérisé en ce que
les bras latéraux du châssis de base (1) forment des parois latérales de châssis creuses (10, 10'), de telle sorte qu'une paroi du châssis (10) acceuille un engrenage à vis sans fin (= engrenage principal 5), composé de la roue hélicoïdale (19) et de la vis sans fin (21), comme un carter de protection d'engrenage et la paroi de châssis opposée (10'), accueille une commande électronique, comme un coffret de commande.

24. Dispositif suivant une ou plusieurs des revendications précédentes,
caractérisé en ce que
à peu près à angle droit de la surface d'appui (11) du châssis de base (1) et de ses parois latérales (10, 10'), un dos de châssis (13) reliant les parois latérales (10, 10'), traverse par l'arbre moteur (20), fait corps sur les fronts de la surface d'appui (11) et des parois latérales (10, 10').

25. Dispositif suivant une ou plusieurs des revendications précédentes,
caractérisé en ce que
le moteur de commande (3) et l'engrenage déflecteur (= engrenage intermédiaire 4) sont flasqués au côté extérieur du dos (13) du châssis et sont enfermés par protection dans un couvercle en forme de carter concave (= capot 26).

26. Dispositif suivant une ou plusieurs des revendications précédentes,
caractérisé en ce que
les faces extérieures des parois latérales (10, 10') du châssis sont revêtues de plaques couvercles amovibles (= couvercles 24, 24' des parois latérales).

27. Dispositif suivant une ou plusieurs des revendications précédentes
caractérisé en ce que
le boîtier (27) du capteur de mesure est fixé entre les bras en U du châssis de base (1), à la face intérieure de la surface d'appui (11) tournée vers la broche enrouleuse (6), opposée à la face intérieure (32) du dos du châssis, de telle sorte que les saillies (28, 28') et la langue palpeuse (= barre palpeuse 30) saillissent de l'enveloppe (39) du châssis de base (1) en direction vers la sangle d'amarrage (7).

28. Dispositif suivant une ou plusieurs des revendications précédentes,
caractérisé en ce que,
pour enrouler la sangle d'amarrage (7), avec l'extrémité libre (8) de la sangle d'amarrage (7) introduite, la broche enrouleuse (6), pivotant autour de son axe de rotation, peut être entraînée par le moteur de commande (3), par l'intermédiaire de l'engrenage déflecteur actif en tant qu'engrenage intermédiaire (4) et par l'intermédiaire de l'engrenage à vis sans fin actif en tant qu'engrenage principal (5).
